# EUROPÄISCHE PATENTSCHRIFT

(11) **EP 1 443 635 B1**
(45) Veröffentlichungstag und Bekanntmachung des Hinweises auf die Patenterteilung: **07.10.2009**
(21) Anmeldenummer: 03001162.1
(22) Anmeldetag: 21.01.2003
(51) Int. Cl.: H02P 6/00, H02P 6/18

(54) **Verfahren zum Steuern des Zündwinkels und einphasiger wechselstromversorgter Elektromotor**
Method for controlling a firing angle and single phase AC fed electric motor
Procédé de contrôle d'un angle d'allumage et moteur électrique alimenté en courant monophasé

(43) Veröffentlichungstag der Anmeldung: 04.08.2004
(73) Patentinhaber: GRUNDFOS A/S, DK-8850 Bjerringbro (DK)
(72) Erfinder: Caroe Aarestrup, Jan, 8850 Bjerringbro (DK)
(74) Vertreter: Vollmann, Heiko

(56) Entgegenhaltungen:
- EP-A- 0 574 823
- EP-A- 0 654 890
- EP-A- 0 666 639
- EP-A- 0 682 404
- EP-A- 0 872 949
- EP-A- 0 909 013
- EP-A- 0 945 973
- EP-A- 0 957 570
- EP-A- 1 075 080
- DE-A- 19 546 145

## Beschreibung

Die Erfindung betrifft ein Verfahren zum Steuern des Zündwinkels eines einphasig wechselstromversorgten Elektromotors sowie einen einphasigen wechselstromversorgten Elektromotor.

Elektromotoren können heutzutage durch elektronische Steuerungen weitgehend unabhängig von der Netzfrequenz angesteuert werden. Allerdings bedingt die Umrichterelektronik selbst unter Einsatz hoch integrierter elektronischer Schaltkreise Kosten, die häufig in der Größenordnung des Motors liegen. Man ist daher bemüht, insbesondere für Motoren kleiner und mittlerer Leistung von beispielsweise unter 200 Watt, Ansteuerungen zu schaffen, die kostengünstig herstellbar sind und die den Motor mit hoher Effektivität, d. h. mit hohem Wirkungsgrad betreiben. Hierzu eignen sich aufgrund ihres hohen Wirkungsgrades insbesondere Permanentmagnetmotoren, die mit einer aus Triacs als Leistungsschalter aufgebauten Ansteuerelektronik versehen sind. Solche Triacs, welche den einzelnen Motorwicklungen als Schalter zugeordnet sind, haben den Vorteil, dass sie zwar kostengünstig herstellbar sind, jedoch den Nachteil, dass es sich bei üblicher Ansteuerung um selbsthaltende Schalter handelt, d. h. die nach dem Einschalten erst dann wieder sperren, wenn der durch den Schalter fließende Strom Null wird bzw. seine Richtung ändert.

Aus DE 35 07 883 A1 ist ein Verfahren zur Ansteuerung eines bürstenlosen Elektromotors mittels Triacs bekannt, bei dem mittels Phasenanschnittsteuerung die Netzspannung so auf die Teilwicklungen der Startorwicklung geschaltet wird, dass auch Drehzahlen unterhalb der Synchrondrehzahl angesteuert werden können, jedoch nur bestimmte Drehzahlen, die nicht frei wählbar sind.

Aus DE 35 17 570 A1 ist ein Verfahren zur Steuerung eines bürstenlosen Elektromotors bekannt, das ebenfalls mittels Triacs die Netzspannung an die entgegengerichteten Teilwicklungen der Motorwicklung zeitweise anlegt, so dass der Motor mit Drehzahlen ansteuerbar ist, die über der Synchrondrehzahl liegen, durch Erzeugung entgegengesetzter Magnetpole. Dadurch kann die Drehzahl den mehrfachen Wert der Synchrondrehzahl annehmen, aber nur ganzzeilige Vielfache der Synchrondrehzahl.

Es ist also bekannt, einen wechselstromversorgten Elektromotor mittels Triacs so anzusteuern, dass dieser nicht nur synchron, sondern auch übersynchron oder untersynchron gefahren werden kann. Damit eröffnet sich ein weites Anwendungsgebiet auch für einphasige wechselstromversorgte Elektromotoren, die bislang nur durch aufwendige Umrichterelektronik drehzahlgesteuert werden konnten.

Doch reicht die Phasenanschnittsteuerung als solche noch nicht aus, um ein zuverlässiges Anfahren, einen ruhigen Lauf und einen hohen Wirkungsgrad im Betrieb zu erreichen und schließlich um zu vermeiden, dass die Magnete des Rotors durch ein unzulässig hohes Magnetfeld des Startors geschädigt werden. Dieses Problem ist in DE 195 34 423 A1 beschrieben. Zur Lösung dieses Problems wird dort vorgeschlagen, einen Sensor zur Messung des Magnetfelds des Rotors vorzusehen und mit Hilfe der Phasenanschnittsteuerung die Wechselspannung in Abhängigkeit des Magnetfeldsensorssignals so auf die Startorwicklung des Motors zu schalten, dass ein Moment in Drehrichtung erzeugt wird. Dabei wird der Strom begrenzt um keine ungewollten hohen Magnetfelder im Startor zu erzeugen.

Nachteilig bei diesem Verfahren ist, dass mindestens ein Magnetfeldsensor zur Erfassung der Rotorposition erforderlich ist. Darüber hinaus wird die Strombegrenzung dadurch erreicht, dass Ströme und Spannungen gemessen und integriert werden und entsprechend dem Rotor bzw. den Positionen der Magnete angepasst wird.

Aus EP 0 872 949 A2 ist ein Verfahren zum Steuern des Zündwinkels zum Hochfahren eines einphasig wechselstromversorgten Elektromotors bekannt, mit welchem nach dem Stillstand des Motors ein Hochfahren in definierter Drehrichtung möglich ist. Allerdings kann dieses Verfahren nicht sicherstellen, dass zumindest kurzzeitig auch ein negatives Drehmoment erzeugt wird, was das Hochfahren des Motors verzögern kann.

Aus DE 195 46 145 A1 ist ein Verfahren zur Steuerung des Zündwinkels beim Hochfahren bis zur Synchrondrehzahl des Motors beschrieben, das energetisch besonders günstig sein soll und insbesondere den Betrieb des Motors bei Synchrondrehzahl betrifft. Dieses Verfahren versucht, den Phasenverschiebungswinkel zwischen EMK und Statorstrom durch Beeinflussung der an der Wicklung anliegenden Spannung gegen Null zu steuern. Die hierzu angegebenen Rechenalgorithmen sind vergleichsweise aufwändig.

Vor diesem Hintergrund liegt der Erfindung die Aufgabe zu Grunde, ein Verfahren zum Steuern des Zündwinkels eines einphasig wechselstromversorgten Elektromotors mittels mindestens eines selbsthaltenden elektronischen Schalters zwischen der Netzversorgung und mindestens einer Motorwicklung zu schaffen, das steuerungstechnisch mit einfachen Mitteln ausführbar ist und einen zuverlässigen und schnellen Anlauf sowie einen ruhigen Lauf bei konstanter frei wählbarer Drehzahl mit hohem Wirkungsgrad ergibt. Darüber hinaus soll das Verfahren nach Möglichkeit ohne mechanische Sensoren am Motor realisierbar sein.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben.

Grundgedanke der vorliegenden Erfindung sind die in Anspruch 1 angegebenen Zündregeln, mit denen ein sicherer und optimierter Anlauf sowie auch die Ansteuerung des Motors mit nahezu jeder beliebigen Drehzahl in einfacher Weise mit hohem Wirkungsgrad und laufruhig ermöglicht wird. Die Zündregeln, wie sie insbesondere auch in den Unteransprüchen weiter angegeben sind, können durch Winkelbetrachtungen bzw. Zeitmessungen zwischen den Nulldurchgängen der Versorgungsspannung und einer der Rotorposition und der Rotorgeschwindigkeit entsprechenden Größe durchgeführt werden.

Das erfindungsgemäße Verfahren setzt insbesondere selbsthaltende elektronische Schalter voraus, also beispielsweise Triacs, die vergleichsweise kostengünstig sind und berücksichtig dabei insbesondere auch die sich in diesem Zusammenhang stellenden schaltungstechnischen Probleme (Selbsthaltung).

Die für die Durchführung des Verfahrens erforderliche Sensorik kann rein elektronisch sein, und somit Teil der Steuerung/Regelung bilden.

Um sicher zu stellen, dass die zu beschaltende Wicklung nicht mit einer Spannung beaufschlagt wird, welche ein der bestimmungsgemäßen Rotordrehrichtung entgegenwirkendes Moment erzeugt, ist die in der zu beschaltenden Wicklung induzierte Spannung, also die EMK (Elektromotorische Kraft; engl. EMF = Electromagnetic Force), zu ermitteln und dafür Sorge zu tragen, dass eine Beschaltung dieser Wicklung nur dann erfolgt, wenn die Versorgungsspannung das gleiche Vorzeichen wie die EMK hat (Regel a).

Dabei soll eine Beschaltung dieser Wicklung nur dann erfolgen, wenn die in der zu beschaltenden Wicklung induzierte Spannung (EMK) nicht nur das gleiche Vorzeichen wie die Versorgungsspannung hat, sondern auch betragsmäßig kleiner als diese ist (Regel b).

Die weitere wesentliche Zündregel besteht darin, dass nur innerhalb eines vorbestimmten Winkelbereichs gerechnet vom Nulldurchgang der induzierten Spannung (EMK) in der zu beschaltenden Wicklung an diese mit der Versorgungsspannung beaufschlagt wird, und zwar nur dann, wenn die induzierte Spannung und die Versorgungsspannung das gleiche Vorzeichen haben (Regel c).

Um den vorbestimmten Winkelbereich, in dem die Zündung erfolgen soll, gemäß Regel c bzw. in Weiterbildung auch d möglichst genau einzuhalten, ist gemäß der Erfindung eine entsprechende Zeitmessung in vorzugsweise der letzten Halbperiode der in der zu beschaltenden Wicklung induzierten Spannung vorzunehmen, um den nächsten zu erwartenden Nulldurchgang der EMK möglichst zuverlässig vorhersagen zu können und daraus den bevorzugten Zündwinkelbereich zu ermitteln.

Eine weitere wesentliche Zündregel besteht schließlich darin, dass die Beschaltung einer Wicklung nur dann erfolgt, wenn der Nulldurchgang der Versorgungsspannung dem aufgrund der Historie des Signalverlaufs der EMK nächst zu erwartenden Nulldurchgang der in der zu beschaltenden Wicklung induzierten Spannung (EMK) bei gleichem Vorzeichenwechsel vorauseilt. Das bedeutet, dass nur dann eine Beschaltung der Wicklung erfolgt, wenn der Nulldurchgang des EMK-Signals von plus nach minus dem Nulldurchgang der Versorgungsspannung von plus nach minus nacheilt, bzw. von minus nach plus, wenn die jeweils um 180 ° Grad versetzten Nulldurchgänge betrachtet werden. Da diese Zündregel exakt erst bestimmt werden kann, wenn der nach dieser Zündregel gegebene Zündzeitpunkt schon vorbei ist, muss für eine praktische Anwendung aus der Historie des EMK-Signals der jeweils nächste zu erwartende Nulldurchgang bestimmt werden, um so überhaupt praktikabel die Regel anwenden zu können. Es ist ersichtlich, dass die Genauigkeit, mit der der zu erwartende Nulldurchgang des EMK-Signals ermittelt werden kann, umso höher ist, je mehr sich die Drehzahl einer konstanten Drehzahl annähert. Diese Zündregel ist also insbesondere für die Ansteuerung mit konstanter Drehzahl vorteilhaft anwendbar. (Regel d).

Die vorgenannte Zündregel kann dadurch weiter spezifiziert werden, dass nur dann eine Zündung, d. h. eine Beschaltung des Triacs zur Leitungsverbindung der Versorgungsspannung mit der zu beschalteten Wicklung erfolgt, so dass der Winkel zwischen der in die zu beschaltenden Wicklung induzierten Spannung (EMK) und der Versorgungsspannung einen vorbestimmten Wert annimmt. Auch diese Zündregel ist insbesondere für die Ansteuerung mit konstanter Drehzahl vorteilhaft (Regel e), wo kein Beschleunigungsüberschuss benötigt wird, also der nach den Regeln d sich ergebende Zündbereich nicht vollständig ausgenutzt werden muss.

Alternativ wird der Schaltzeitpunkt vorzugsweise so gewählt, dass der Winkel zwischen dem Zeitpunkt, wenn der Strom in der zu beschaltenden Wicklung Null annimmt bis zu dem Zeitpunkt, indem die induzierte Spannung in dieser Wicklung den Wert Null annimmt, dem Winkel oder dem mit einem zwischen vorzugsweise 0,5 und 2 multiplizierten Faktor dieses Winkels entspricht, der zwischen dem vorherigen Nulldurchgang der induzierten Spannung und dem aktuellen Zündzeitpunkt liegt. Auch diese Zündregel ist insbesondere für die Ansteuerung mit konstanter Drehzahl von Vorteil und bewirkt im Hinblick auf den Signalverlauf der Versorgungsspannung eine weitgehend symmetrische Beschaltung der jeweiligen Wicklung (Regel f). Die Regel f erfordert jedoch im Vergleich zur Regel e eine höhere Rechenkapazität.

Bei Berücksichtigung einer oder bevorzugt mehrerer der vorstehend genannten Bedingungen wird der Motor zügig angefahren und mit beliebiger Drehzahl bei gutem Wirkungsgrad betrieben und kann mittels eines Regelkreises mit einer beliebigen Drehzahl angesteuert werden. Darüber hinaus gewährleistet das erfindungsgemäße Zündverfahren einen besonders ruhigen Lauf des Motors, was insbesondere beim Einsatz im Bereich von Heizungsumwälzpumpen von Vorteil ist, deren Geräuschemissionen über das Rohleitungsnetz nahezu ungedämpft weitergeleitet werden.

Besonders vorteilhaft ist es, wenn der Winkel gemäß Zündregel e drehzahlabhängig und für jede Phase gesondert gewählt wird, da der Winkel der geometrischen Versetzung der anderen Phasen angepasst werden muss.

Vorzugsweise werden die Zündregeln c und d, wonach die Beschaltung der Wicklung nur dann erfolgt, wenn die in der zu beschaltenden Wicklung induzierte Spannung bezogen auf ihren Nulldurchgang in einem vorbestimmten Winkelbereich liegt, gleiches Vorzeichen von induzierter Spannung und Versorgungsspannung vorausgesetzt, sowie der Nulldurchgang der Versorgungsspannung vor dem zu erwartenden Nulldurchgang der in die zu beschaltende Wicklung induzierten Spannung, gleiche Signalrichtung vorausgesetzt, liegt, für den untersynchronen Hochlauf des Motors (Anfahren des Motors oder Beschleunigen im untersynchronen Bereich) angewendet. Für den übersynchronen Hochlauf, d. h. die Beschleunigung des Motors im übersynchronen Bereich auf eine gewünschte übersynchrone Drehzahl, hingegen ist bevorzugt die Zündregel d anzuwenden, da bei dieser Regel ein zeitweise bremsendes Moment verhindert wird. Für den Betrieb des Motors mit konstanter Drehzahl ist die Zündregel e vorteilhaft zu wählen, da dann ein besonders ruhiger und gleichmäßiger Motorlauf gewährleistet ist bei maximalem Wirkungsgrad.

Bevorzugt werden bei dem erfindungsgemäßen Verfahren die in einer Wicklung induzierte Spannung, insbesondere deren Nulldurchgänge erfasst, und zwar bei abgeschalteter Versorgungsspannung. Alternativ können diese Werte auch unter Berücksichtigung der Rotorposition rechnerisch ermittelt werden.

Bei dem erfindungsgemäßen Verfahren kann die Messwerterfassung, insbesondere der EMK in der vom Netz getrennten Wicklung mit technisch vergleichsweise einfachen Mitteln dadurch erfolgen, dass ermittelt wird, ob die Wicklung sich im stromlosen Zustand befindet und nachfolgend die EMK durch Aufschalten einer Messeinrichtung zu Spannungsdifferenzmessung über die Wicklung erfasst wird. Die Ermittlung des stromlosen Zustands kann wie weiter unten beschrieben erfolgen. Zum einen sind die Nulldurchgänge zu erfassen, was messtechnisch unproblematisch ist, da nicht ein konkreter Wert, sondern nur der Polaritätswechsel zu ermitteln ist. Gemäß einer Weiterbildung der Erfindung kann es jedoch zum Steuern des Zündwinkels auch erforderlich sein, die in der zu beschaltenden Wicklung induzierte Spannung zu erfassen um festzustellen, ob diese betragsmäßig kleiner als die Versorgungsspannung ist oder nicht. Dies kann in einfacher Weise dadurch erfolgen, indem die Spannung über dem Schalter gemessen wird, welcher die Wicklung, deren EMK zu ermitteln ist, mit dem Versorgungsnetz verbindet bzw. von diesem trennt. Da auf der einen Seite dieses Schalters stets die Versorgungsspannung und auf der anderen Seite die induzierte Spannung (EMK) der Wicklung ansteht, ergibt sich bei Messung über dem Schalter stets die Differenz dieser Spannungen, so dass für das erfindungsgemäße Verfahren lediglich eine vorzeichenmäßige Auswertung diese Messung zur erfolgen hat. Das bedeutet, dass die Spannungen quantitativ gar nicht erfasst werden müssen, sondern lediglich das Vorzeigen der sich hier ergebenen Differenzspannung, was messtechnisch einfach zu ermitteln ist. Der Vorzeichenwechsel repräsentiert hier gleichzeitig den Zeitpunkt wenn der Wicklungsstrom den Wert Null annimmt.

Vorteilhaft werden nach dem erfindungsgemäßen Verfahren nicht nur die Nulldurchgänge der induzierten Spannungen (EMK) in den Wicklungen sondern auch die Nulldurchgänge der Versorgungsspannung ermittelt und im Hinblick auf den Zündzeitpunkt ausgewertet. Diese Ausführungsform die die Nulldurchgänge der Versorgungsspannung und der EMK und die Spannung über dem Schalter ermittelt und auswertet, um die Zündregeln zu realisieren, beruht allein auf Zeitmessungen und Winkelbetrachtungen ohne quantitative elektrische Größen erfassen zu müssen. Dieser Aufbau ist daher besonders einfach und robust.

Aufgrund der geometrisch festliegenden Beziehungen der Wicklungen zueinander kann der vorbestimmte Winkelbereich der in der zu beschaltenden Wicklung induzierten Spannung (EMK) durch Ermittlung des Nulldurchgangs der in einem anderen Pol induzierten Spannung ermittelt werden, und zwar unter Berücksichtigung der geometrischen Polanordnung. Es muss daher nicht stets die EMK der Wicklung betrachtet werden, die gerade beschaltet werden soll, sondern es kann auch eine beliebig andere Wicklung unter Berücksichtigung ihrer Winkellage zur Auswertung dienen, zumindest soweit es die Bestimmung der Nulldurchgänge angeht.

Anstelle der Signalerfassung der EMK über Messung in einer vom Versorgungsnetz getrennten Wicklung kann auch eine sensorische Erfassung vorgesehen sein. Insbesondere die Nulldurchgänge der EMK können mittels eines die Rotorposition erfassenden Sensors und rechnerisch ermittelt werden. Als Sensor kann ein Hallsensor oder ein anderer elektronischer Sensor dienen. Dabei wird vorteilhaft jeder Phase des Motors ein gesonderter Sensor zugeordnet, derart, das der Polaritätswechsel des vom Sensor erfassten Magnetfeldes mit dem Nulldurchgang der in der zu beschaltenden Wicklung induzierten Spannung (EMK) übereinstimmt. Bei entsprechender Zuordnung kann dann nämlich das Sensorsignal, zumindest soweit es den Nulldurchgang angeht, verwendet werden, da es insofern der EMK entspricht. Es ist dann also keine Winkel berücksichtigende Signalaufbereitung erforderlich.

Um die EMK einer Wicklung in beschalteten Zustand erfassen zu können, kann die EMK in einer anderen, zu diesem Zeitpunkt nicht beschalteten, also nicht mit dem Versorgungsnetz verbundenen Wicklung erfasst werden, wobei dann entsprechend der geometrischen Zuordnung dieser beiden Wicklungen ein entsprechendes rechnerisches Phasenverschiebung erfolgt , so dass sich ein EMK-Signal ergibt, welches die EMK in der beschalteten Wicklung repräsentiert.

Der vorbestimmte Winkelbereich der EMK, in dem die Zündung, d. h. die Beschaltung der Wicklung mit der Netzversorgung erfolgen soll, ist abhängig von der Motorausbildung. Bei einem vierpoligen (vierphasigen) Motor erfolgt die Zündung vorzugsweise in den ersten 90 ° Grad der EMK, gleiches Vorzeichen von induzierter Spannung und Versorgungsspannung vorausgesetzt.

Ein entsprechend einphasig wechselstromversorgter Elektromotor mit Permanentmagnetmotor weist mindestens eine im Stator angeordnete Wicklung auf, die mittels eines selbsthaltenden elektronischen Schalters, insbesondere eines Triacs mit der Versorgungsspannung beaufschlagbar ist. Bevorzugt ist bei einer solchen Anordnung mindestens ein weiterer selbsthaltender elektronischer Schalter vorgesehen, mit dem ein phasenverschiebendes Bauteil aufschaltbar ist. Als elektronischer Schalter wird bevorzugt ebenfalls ein Triac eingesetzt, wobei das Phasen verschiebende Bauteil vorteilhaft ein Kondensator ist. Hierdurch kann beim Betrieb des Motors eine besonders hohe Laufruhe erzielt werden, wenn der Kondensator nach dem Anlaufen zugeschaltet wird.

Die Erfindung ist nachfolgend anhand von in der Zeichnung dargestellten Ausführungsbeispielen näher erläutert. Es zeigen:
- Fig. 1 - 5: jeweils unterschiedliche Signalverläufe, anhand derer die Zündregeln beispielhaft erläutert werden und
- Fig. 6: ein Schaltbild eines einphasig wechselstromversorgten zweipoligen Elektromotors.

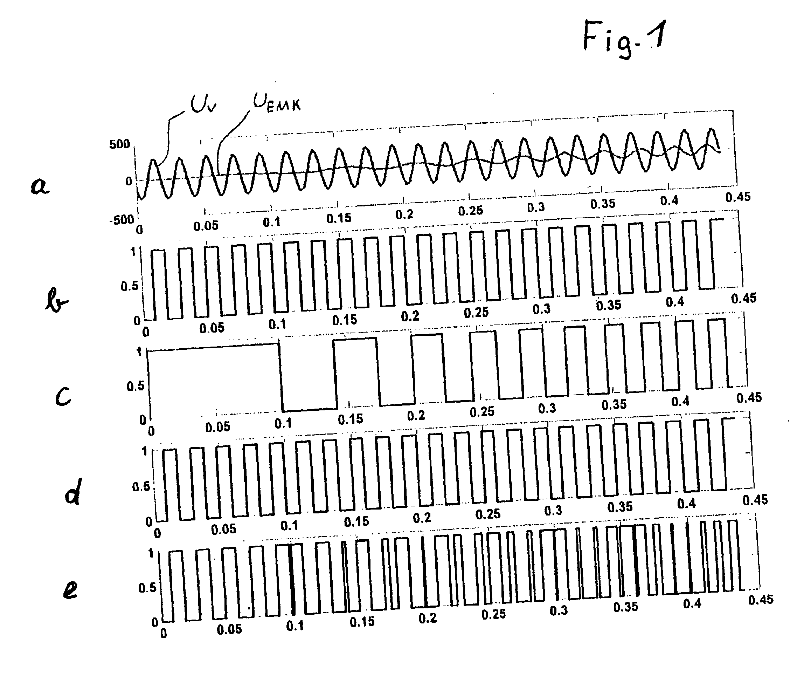

Fig. 1 zeigt insgesamt fünf Diagramme a, b, c, d und e, deren Zeitachsen horizontal verlaufen und übereinstimmen. In Fig. 1a ist der zeitliche Verlauf der Versorgungsspannung Uᵥ sowie der zeitliche Verlauf der in einer Wicklung induzierten Spannung U_{EMK} aufgetragen. Während die Versorgungsspannung Uᵥ das übliche 50 Hz Wechselspannungssignal darstellt, zeigt der Verlauf der induzierten Spannung U_{EMK} ein typisches Anfahrverhalten. Mit Beginn der Drehung des Rotors steigt die in der Wicklung induzierte Spannung nur allmählich an, dabei entspricht die Periodendauer der reziproken Rotorgeschwindigkeit. Gemäß der Zündregel a soll die Versorgungsspannung Uᵥ nur dann auf die Wicklung geschaltet werden, wenn die in dieser Wicklung induzierte Spannung U_{EMK} das gleiche Vorzeichen wie die Versorgungsspannung Uᵥ hat. Das Vorzeichen der Versorgungsspannung Uᵥ über deren zeitlichen Verlauf ist in Fig. 1d dargestellt, wobei der Wert Null einem negativen Vorzeichen und der Wert 1 einem positiven Vorzeichen entspricht. Zur Anwendung der ersten Bedingung, dass nämlich die in der zu beschaltenden Wicklung induzierte Spannung U_{EMK} das gleiche Vorzeichen wie die Versorgungsspannung Uᵥ hat, ist also lediglich zu ermitteln, wann die Kurven nach Fig. 1b und 1c in ihren Werten (0 oder 1) übereinstimmen, dann ist diese Bedingung erfüllt.

Wie der Fig. 1d zu entnehmen ist, wird jedoch hier auch die Zünderegel b, nämlich dass die in der zu beschaltenden Wicklung induzierte Spannung U_{EMK} bei gleichem Vorzeichen betragsmäßig kleiner als die Versorgungsspannung ist, überprüft. Hierzu ist in Fig. 1d aufgetragen, wann letzteres der Fall ist, nämlich in den Bereichen der Kurve, in denen die Kurve den Wert 1 erreicht.

Anhand der Fig. 1e sind nun die sich nach der Regel a und b ergebenden Einschaltzeiten dargestellt. Die Fig. 1e stellt dar, wann das Signal der Kurven 1 b, 1 c und 1 d gleichzeitig 1 ist oder wann eine oder mehrere dieser Kurven nicht den Wert 1 annimmt. Die Fig. 1e gibt somit in den Bereichen der Kurve, in denen der Wert 1 angegeben ist, die nach Anwendung der Regeln a und b möglichen Zeitintervalle zum Beschalten der Wicklung, d. h. zum Schalten des Triacs zur Verbindung der Wicklung mit der Versorgungsspannung an. Die Zeitintervalle, in denen die Kurven nach Fig. 1e den Wert 1 aufweist, stellt natürlich nur die möglichen Einschaltzeiten des jeweiligen Triacs dar, aufgrund der Selbsthaltung erfolgt die Abschaltung selbsttätig, und zwar wenn der Wicklungsstrom den Wert Null annimmt. Die Abschaltzeiten sind somit in diesem und auch in den folgenden Diagrammen nicht eingezeichnet, sondern nur die möglichen Einschaltzeiten.

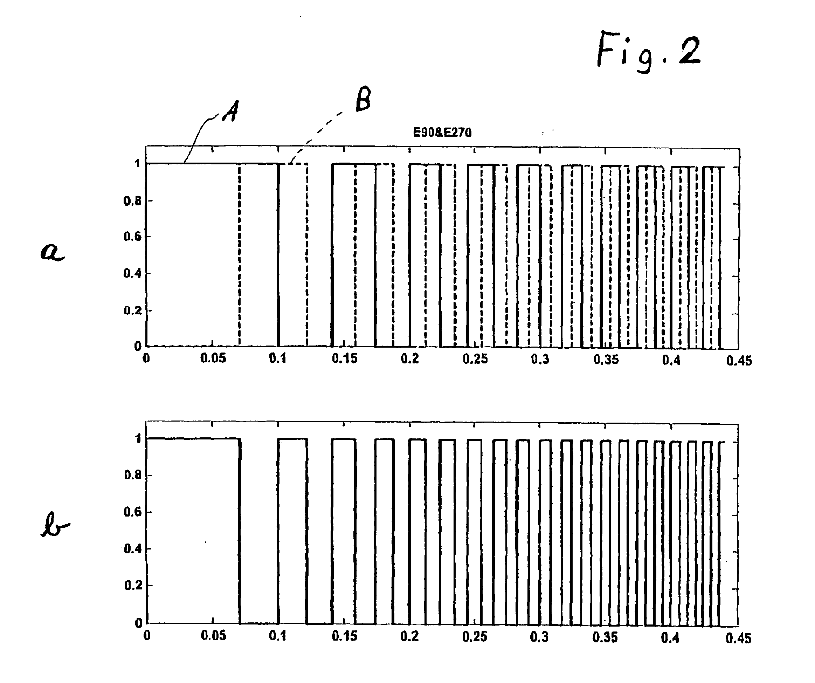

Anhand von Fig. 2 sind die nach Zündregel c sich ergebenden Einschaltzeiten erläutert. Die Zündregel c besagt, dass die in der zu beschaltenden Wicklung induzierte Spannung U_{EMK} sich bezogen auf ihren Nulldurchgang in einem vorbestimmten Winkelbereich befindet, wobei gleiches Vorzeichen der induzierten Spannung und der Versorgungsspannung vorausgesetzt ist. Dieser Winkelbereich kann je nach Anwendungsfall und Motorkonstruktion unterschiedlich sein und ist im Einzelnen zu wählen. Bei dem Anhand von Fig. 2 dargestellten zweipoligen Motor beträgt dieser Winkelbereich 90° nach dem Nulldurchgang der U_{EMK}-Spannung. Die in Fig. 2 a dargestellten Kurven A und B repräsentieren das Vorzeichen der in den Wicklungen zweier Pole induzierten Spannung U_{EMKA} und U_{EMKB}. Wenn der Motor die niedrigen Anfahrdrehzahlen verlassen hat und mit konstanter Drehzahl betrieben wird, ist der gewünschte Winkelbereich durch Zeitmessung aus der vorhergehenden Periode gewonnen werden, was sich aus dem rechten Teil der Fig. 2a ergibt. In der Fig. 2b sind die sich aus Fig. 2a ergebenden Zeitintervalle, in denen eine Zündung, d. h. ein Schalten des die Wicklung A mit der Versorgungsspannung Uv verbindenden Triacs erfolgen dürfen mit 1 gekennzeichnet. Also dort, wo die Kurve nach Fig. 2b den Wert 1 annimmt kann das Triac für die Wicklung A geschaltet werden, wenn die Zündregel c eingehalten werden soll.

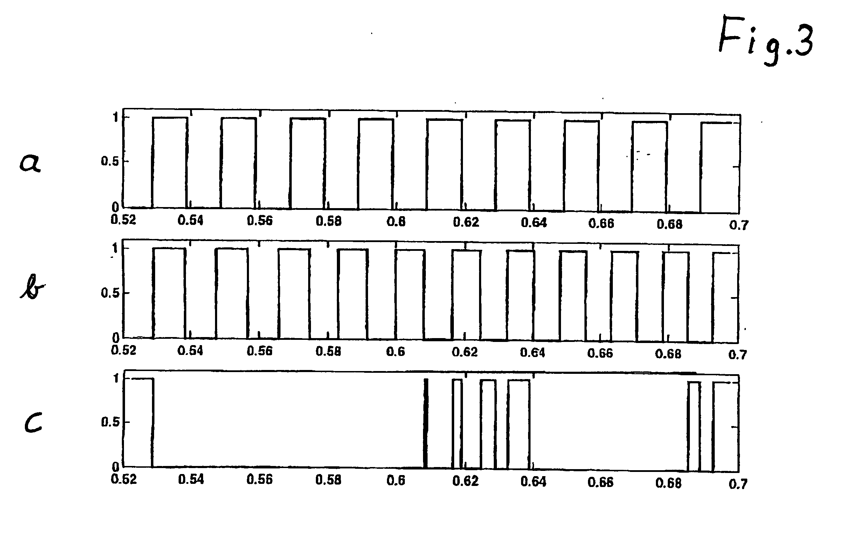

Anhand von Fig. 3 ist dargestellt, wie die Zündregel d zu handhaben ist. Wie in den vorbeschriebenen Diagrammen ist auch in den Diagrammen der Fig. 3a, b und c auf der horizontalen Achse die Zeit dargestellt, in Fig. 3a ist auf der vertikalen das Vorzeichen der Versorgungsspannung (bei 1 positiv, bei 0 negativ), in Fig. 3b das Vorzeichen der in der zu beschaltenden Wicklung induzierten Spannung U_{EMK} und in Fig. 3c die Zeitintervalle, die sich gemäß Regel d ergeben, um den Triac der zugehörigen Wicklung zu zünden, d. h. diese Wicklung mit dem Versorgungsnetz zu verbinden.

Die Regel d besagt, dass der Triac nur dann gezündet werden soll, wenn der Nulldurchgang der Versorgungsspannung Uᵥ vor dem zu erwartenden Nulldurchgang der in die zu beschaltende Wicklung induzierten Spannung U_{EMK} liegt, wobei gleiche Richtung vorausgesetzt ist, d. h. dass der Vorzeichenwechsel der zu betrachtenden Nulldurchgänge der Versorgungsspannung und der induzierten Spannung gleich gerichtet, d. h. in beiden Fällen von Plus nach Minus oder aber von Minus nach Plus verlaufen soll. Da die Zündregel d bezogen auf den Nulldurchgang der Versorgungsspannung ein zukünftiges Ereignis bedingt, das zu diesem Zeitpunkt noch nicht messtechnisch erfassbar ist, muss dieses Ereignis anhand der vorangegangenen Nulldurchgänge der induzierten Spannung errechnet bzw. in anderer geeigneter Weise abgeschätzt oder ermittelt werden. Hierzu ist es zweckmäßig, die vorangegangenen Nulldurchgänge zu erfassen und anhand deren Abstand bzw. deren Abstandsänderung einen zu erwartenden Nulldurchgang zu ermitteln, anhand dessen dann die Regel d eingehalten wird. Die Fig. 3c gibt dort, wo die Kurve den Wert 1 annimmt, die Zeitintervalle an, in denen nach der Regel d eine Zündung des Triacs der zugehörigen Wicklung erfolgen soll. Wie der zeitliche Bereich 0,54 bis 0,6 sowie 0,64 bis 0,68 der Kurve nach Fig. 3c verdeutlichen, ergeben sich dort keine Einschaltzeitintervalle, da in diesen Bereichen entweder der Nulldurchgang der Versorgungsspannung Uᵥ nicht vor dem zu erwartenden Nulldurchgang der in die zu beschaltende Wicklung induzierten Spannung U_{EMK} liegt oder die Richtung umgekehrt ist. Diese Einschaltbegrenzung hat den Zweck, einen ein negatives Moment erzeugenden Stromfluss zu verhindern.

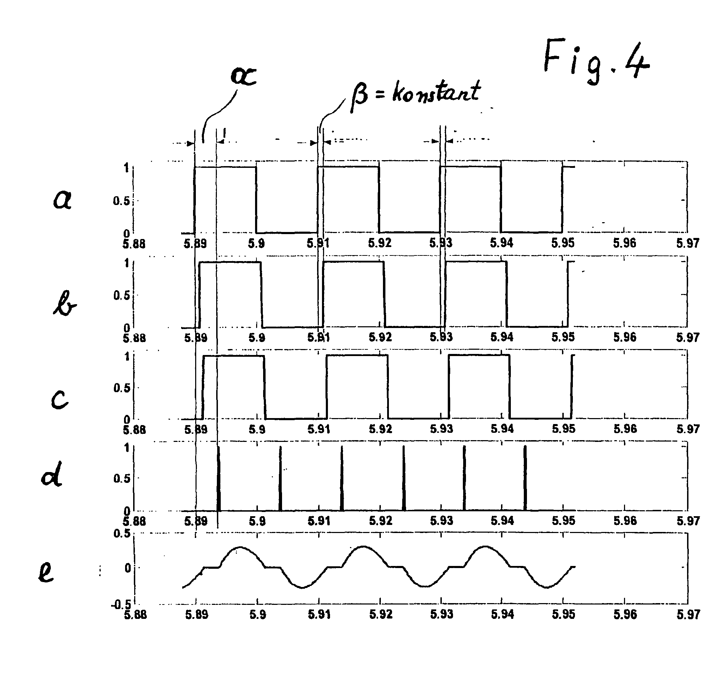

Gemäß Regel e soll die Zündung derart erfolgen, dass der Winkel zwischen der in die zu beschaltende Wicklung induzierten Spannung U_{EMK} und der Versorgungsspannung Uᵥ einen vorbestimmten Wert annimmt. Diese Regel stellt eine Art Optimierungsverfahren dar und ist anhand von Fig. 4 dargestellt.

In Fig. 4a ist der zeitliche Verlauf des Vorzeichens der Versorgungsspannung dargestellt, wobei 1 ein positives und 0 ein negatives Vorzeichen repräsentiert. Fig. 4b stellt den zeitlichen Verlauf des Vorzeichens der in der zu beschaltenden Wicklung induzierten Spannung U_{EMK} dar. Die Fig. 4c zeigt den zeitlichen Verlauf des Vorzeichens der Spannung über dem Schalter (Triac), d. h. das Vorzeichen der sich aus der Versorgungsspannung Uᵥ und der in der zu beschaltenden Wicklung induzierten Spannung U_{EMK} ergebenden Spannung. Fig. 4d zeigt die nach Regel e erfolgte Optimierung des Zündzeitpunktes und Fig. 4e den Stromverlauf in der Wicklung. Danach soll der Winkel β zwischen dem Nulldurchgang der Versorgungsspannung Uᵥ und dem Nulldurchgang der induzierten Spannung U_{EMK} in der zu beschaltenden Wicklung konstant, d. h. einem vorbestimmten Wert entsprechen. Um dies zu erreichen ist der Zündwinkel α gerechnet vom Nulldurchgang der Versorgungsspannung entsprechend einzustellen, bis sich dieser Winkel β = konstant ergibt. Der Winkel β wird also durch Verstellen des Zündwinkels α konstant geregelt. Das Signal gemäß Fig. 4c wird für diese Optimierungsregeln nicht benötigt.

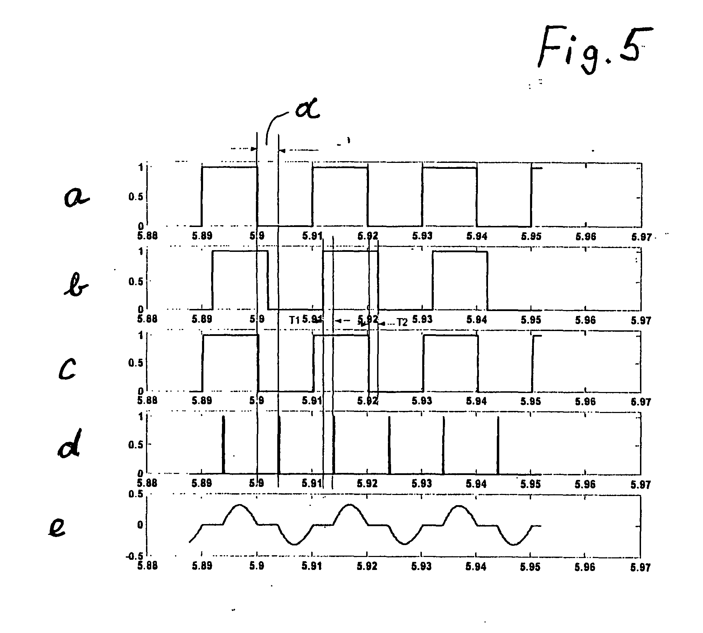

Eine alternative Zündoptimierung kann nach Regel f erfolgen, wie sie anhand von Fig. 5a bis e dargestellt ist. Danach soll die Zündung so erfolgen, dass der Winkel T₂ zwischen dem Zeitpunkt, wenn der Strom I_{w} (siehe Fig. 5e) in der zu beschaltenden Wicklung den Wert 0 annimmt(ergibt sich aus Fig. 5c) bis zu dem Zeitpunkt, in dem die induzierte Spannung U_{EMK} in dieser Wicklung den Wert 0 annimmt, dem Winkel T₁ entspricht, der zwischen dem vorherigen Nulldurchgang der induzierten Spannung und dem aktuellen Zündzeitpunkt liegt. Die Kurvenverläufe nach Fig. 5 verdeutlichen dies im Einzelnen, die Darstellungen nach a bis c entsprechen denen der Fig. 4a bis c, auf die soweit verwiesen wird. Es ist in diesem Fall zunächst T₂ zu ermitteln um dann den Zündwinkel α so zu variieren, dass T₁ = T₂, also diese Winkel gleich groß sind. Es können alternativ auch diese Winkel in ein vorbestimmtes Verhältnis gesetzt werden. Diese Zündregel dient insbesondere einem ruhigen Lauf des Motors und einer gleichmäßigen Lastverteilung.

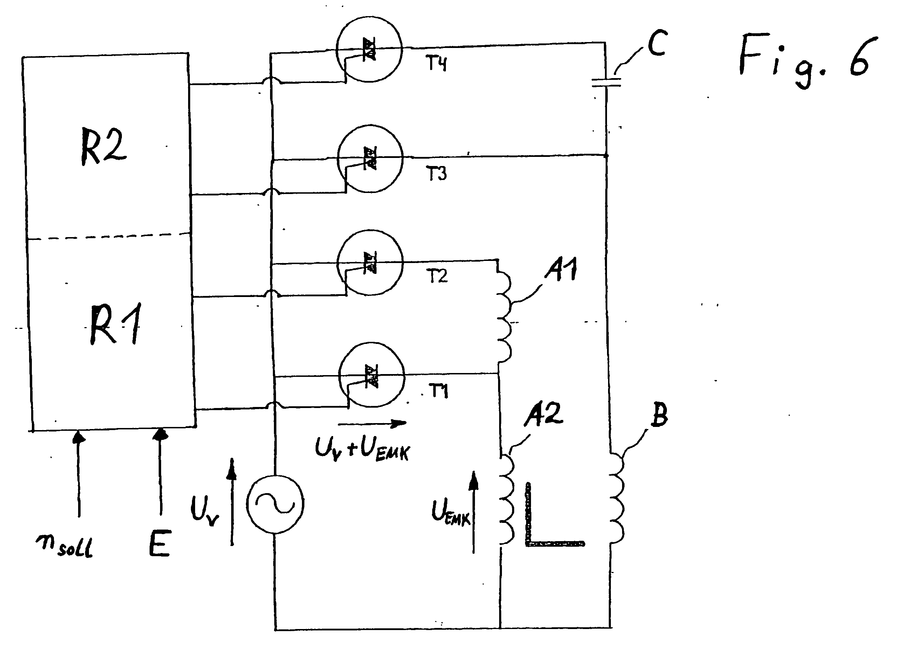

Anhand von Fig. 6 ist beispielhaft ein Ersatzschaltbild eines zweipoligen Motors dargestellt. Der Motor weist zwei um 90° zueinander versetzte Pole und entsprechende Wicklungen A und B auf, jede der Wicklungen A und B ist durch ein Triac T2 bzw. Triac T3 mit der Versorgungsspannung Uv verbunden. Die Triacs T2 und T3 werden nach den vorbeschriebenen Zündregeln geschaltet, so dass die Wicklung A bzw. die Wicklung B mit der Versorgungsspannung Uᵥ beaufschlagt wird, und zwar solange bis der Strom in dieser Wicklung Null wird. Bei dem anhand von Fig. 6 dargestellten Motor ist über ein drittes Triac T4 zusätzlich noch ein Kondensator C zuschaltbar, welcher eine Phasenverschiebung der Wicklungen A und B zueinander bewirkt. Dieser Kondensator wird insbesondere beim Lauf mit konstanter und synchroner Drehzahl zugeschaltet und bewirkt einen ruhigen, gleichmäßigen und somit geräuscharmen Lauf des Motors. Beim Zu- und Abschalten des Kondensators sind besondere Vorkehrungen zu treffen. Beim Zuschalten des Kondensators ist sicherzustellen, dass der Triac T3 nicht durchgeschaltet ist, bevor der Triac T4 unter Berücksichtigung mindestens der Zündregeln a und b geschaltet wird.

Die Zustellung des Kondensators C erfolgt also wenn der durch das Triac T3 fließende Strom Null ist, da dann T3 geöffnet ist. Dies kann erfasst werden, in dem entweder die Spannung über T3 gemessen wird oder ein zeitlicher Abstand, beispielsweise von einer halben Periode der Versorgungsspannung Uᵥ gewartet wird, bis T4 geschaltet wird.

Bei dem anhand von Fig. 6 dargestellten Motor ist die Wicklung A in zwei Teilwicklungen A1 und A2 aufgeteilt, wobei die Teilwicklung A2 mittels eines Triacs T1 ansteuerbar ist wo hingegen die Gesamtwicklung, bestehend aus den in Reihe geschalteten Teilwicklungen A1 und A2 durch das Triac T2 beschaltet wird. Die Aufteilung der Wicklung A in Teilwicklungen A1 und A2 ermöglicht es dann, wenn sich insbesondere bei Synchrondrehzahl vergleichsweise hohe Phasenschnittwinkel ergeben, einen Teil der Wicklung, nämlich beispielsweise den Wicklungsteil A1 abzuschalten um auf diese Weise kleinere Phasenschnittwinkel zu erreichen und somit einen ruhigeren Lauf des Motors. Diese Maßnahme ist insbesondere zum Auffangen von Netzschwankungen geeignet und insofern auch entbehrlich wenn auf andere Weise ein stabiles Versorgungsnetz sichergestellt wird. In gleicher Weise kann der zuschaltbare Kondensator C entfallen, insbesondere wenn eine Wirkungsgradoptimierung nicht erforderlich ist. Dies gilt auch für den Schalter T3, der ein gesondertes Schalten der Wicklung B ermöglicht. Wenn eine Phasenanschnittssteuerung für B nicht erforderlich ist, kann dieser dieses Triac T3 entfallen, dann ist allerdings kein übersynchroner Betrieb des Motors mehr möglich. Wenn also der Motor lediglich für synchronen oder untersynchronen Betrieb ausgelegt ist, kann der Schalter T3 entfallen.

Allen Anordnungen gemeinsam ist ein Drehzahlregelkreis R1, welcher die Schalter T1 bis T4 ansteuert und der die Drehzahl entsprechend den Regeln a bis d durch Ansteuern der Schalter T1 bis T4 in Abhängigkeit der Sollwerteingabe nₛₒₗₗ und der elektrischen Größen E, welche sich aus der Versorgungsspannung Uᵥ und den induzierten Spannungen U_{EMK} der einzelnen Wicklungen bzw. Wicklungsteile ergibt. Durch diesen Regelkreis R1, welche die Zündregeln a bis d anwendet, ist es überhaupt erst möglich, einen Synchronmotor mit praktisch beliebiger Drehzahl anzusteuern.

Um die Wirkungsgradoptimierungsregel e und f anzuwenden ist ein weiter Regelkreis R2 vorgesehen, welcher die Schalter T1 bis T4 entsprechend den Regeln e und f sowie den Regeln a bis d des Regelkreises R1 ansteuert.

## Patentansprüche

1. Verfahren zum Steuern des Zündwinkels eines einphasig wechselstromversorgten Elektromotors mittels mindestens eines selbsthaltenden elektronischen Schalters (T2, T3) zwischen der Versorgungsspannung (Uᵥ) und mindestens einer Motorwicklung (A, B), bei dem der oder die Schalter (T2, T3) nach folgenden Bedingungen eingeschaltet werden:
a. die in der zu beschaltenden Wicklung (A, B) induzierte Spannung (U_{EMK}) hat das gleiche Vorzeichen wie die Versorgungsspannung (Uᵥ),
b. die in der zu beschaltenden Wicklung (A, B) induzierte Spannung (U_{EMK}) ist bei gleichem Vorzeichen betragsmäßig kleiner als die Versorgungsspannung (Uᵥ) und
c. sich die in der zu beschaltenden Wicklung (A, B) induzierte Spannung (U_{EMK}) bezogen auf ihren Nulldurchgang in einem vorbestimmten Winkelbereich, gleiches Vorzeichen von induzierter Spannung und Versorgungsspannung (Uv) vorausgesetzt, befindet,
**dadurch gekennzeichnet, daß**
der vorbestimmte Winkelbereich durch eine Zeitmessung in einer der vorherigen Halbperioden der in der zu beschaltenden Wicklung (A, B) induzierten Spannung (U_{EMK}) ermittelt wird.

2. Verfahren nach Anspruch 1, bei dem der oder die Schalter (T2, T3) unter der Bedingung d. eingeschaltet werden, dass der Nulldurchgang der Versorgungsspannung (Uᵥ) vor dem zu erwartenden Nulldurchgang der in die zu beschaltende Wicklung (A, B) induzierten Spannung (U_{EMK}), gleiche Richtung vorausgesetzt, liegt.

3. Verfahren nach einem der vorhergehenden Ansprüche, bei dem der oder die Schalter (T2, T3) unter der Bedingung e. eingeschaltet werden, dass die Zündung derart erfolgt, dass der Winkel zwischen der in der zu beschaltenden Wicklung (A, B) induzierten Spannung (U_{EMK}) und der Versorgungsspannung (Uᵥ) einen vorbestimmten Wert annimmt, vorzugsweise der Winkel drehzahlabhängig für jede Phase gesondert gewählt wird.

4. Verfahren nach einem der vorhergehenden Ansprüche, bei dem der oder die Schalter (T2, T3) unter der Bedingung f. einigeschaltet werden, dass die Zündung derart erfolgt, dass der Winkel zwischen dem Zeitpunkt, wenn der Strom in der zu beschaltenden Wicklung (A, B) den Wert Null annimmt bis zu dem Zeitpunkt, in dem die induzierte Spannung (U_{EMK}) in dieser Wicklung (A, B) den Wert Null annimmt, von dem Winkel abhängig ist, der zwischen dem vorherigen Nulldurchgang der induzierten Spannung und dem aktuellen Zündzeitpunkt liegt.

5. Verfahren nach einem der vorhergehenden Ansprüche, bei dem die Zündung so erfolgt, dass der Winkel zwischen dem Zeitpunkt, wenn der Strom in der zu beschaltenden Wicklung (A, B) den Wert Null annimmt bis zu dem Zeitpunkt, in dem die induzierte Spannung (U_{EMK}) in dieser Wicklung den Wert Null annimmt, dem Winkel entspricht, der zwischen dem vorherigen Nulldurchgang der induzierten Spannung (U_{EMK}) und dem aktuellen Zündzeitpunkt liegt.

6. Verfahren nach einem der vorhergehenden Ansprüche, bei dem die in einer Wicklung (A, B) induzierte Spannung (U_{EMK}), insbesondere deren Nulldurchgänge und deren Vorzeichen, bei abgeschalteter Versorgungsspannung (Uᵥ) gemessen wird.

7. Verfahren nach einem der vorhergehenden Ansprüche bei dem die in der zu beschaltenden Wicklung (A, B) induzierte Spannung (U_{EMK}), insbesondere deren Nulldurchgänge, mittels mindestens eines die Rotorposition erfassenden Sensors rechnerisch ermittelt wird.

8. Verfahren nach einem der vorhergehenden Ansprüche, bei dem der Nulldurchgang der zu beschaltenden Wicklung (A, B) durch Messung des Polaritätswechsels des Magnetfeldes der jeweiligen Phase erfolgt.

9. Verfahren nach einem der vorhergehenden Ansprüche, bei dem ermittelt wird, ob die in der zu beschaltenden Wicklung (A, B) induzierte Spannung (U_{EMK}) bei gleichem Vorzeichen betragsmäßig kleiner als die Versorgungsspannung (Uᵥ) ist, indem die Spannung über dem Schalter (T2, T3) dieser Wicklung (A, B) gemessen wird und vorzeichenabhängig ausgewertet wird.

10. Verfahren nach einem der vorhergehenden Ansprüche, bei dem die Nulldurchgänge der Spannung (Uᵥ) der Netzversorgung sowie die der in den Wicklungen (A, B) induzierten Spannungen (U_{EMK}) erfasst und im Hinblick auf den Zündzeitpunkt vorzugsweise durch Zeitmessung ausgewertet werden.

11. Verfahren nach einem der vorhergehenden Ansprüche, bei dem der vorbestimmte Winkelbereich bei einem vierpoligen Motor 90 Grad beträgt.

12. Verfahren nach einem der vorhergehenden Ansprüche, bei dem der vorbestimmte Winkelbereich durch eine Zeitmessung in der letzten Halbperiode der in der zu beschaltenden Wicklung (A, B) induzierten Spannung (U_{EMK}) ermittelt wird.

13. Einphasig wechselstromversorgter Synchronmotor mit Permanentmagnetrotor mit mindestens einer im Stator angeordneten Wicklung (A, B), die mittels eines selbsthaltenden elektronischen Schalters (T2, T3) mit Versorgungsspannung (Uᵥ) beaufschlagbar ist, mit einem elektronischen Regelkreis (R1), der eine vorgebbare Solldrehzahl (nₛₒₗₗ) unter Anwendung der Zündregeln gemäß den Ansprüchen 1 bis 2 steuert, **dadurch gekennzeichnet, daß** bei dem Regelkreis der vorbestimmte Winkelbereich durch eine Zeitmessung in einer der vorherigen Halbperioden der in der zu beschaltenden Wicklung (A, B) induzierten Spannung (U_{EMK}) ermittelt wird.

14. Synchronmotor nach Anspruch 13, bei dem ein weiterer Regelkreis (R2) zur Wirkungsgradoptimierung vorgesehen ist, der unter Anwendung der Optimierungsregeln gemäß den Ansprüchen 3 und 4 steuert.

15. Synchronmotor nach einem der vorhergehenden Ansprüche, bei dem einer Wicklung (A, B) ein phasenverschiebendes Bauteil (C) vorgeschaltet ist.

16. Synchronmotor nach einem der vorhergehenden Ansprüche, bei dem mindestens ein weiterer selbsthaltender elektronischer Schalter (T4) vorgesehen ist, mit dem das phasenverschiebende Bauteil (C) aufschaltbar ist.

17. Synchronmotor nach einem der vorhergehenden Ansprüche, bei dem das phasenverschiebende Bauteil ein Kondensator (C) ist und die elektronischen Schalter (T1 - T4) Triacs sind.

18. Synchronmotor nach einem der vorhergehenden Ansprüche, bei dem eine Wicklung (A) in zwei Teilwicklungen (A1 - A2) aufgeteilt ist, wobei jeder Teilwicklung (A1 und A2) ein selbsthaltender elektronischer Schalter (T1, T2) zugeordnet ist.

## Claims

1. A method for controlling the firing angle of a single-phase electric motor supplied with alternating current, by way of at least one locking electronic switch (T2, T3) between the supply voltage (Uᵥ) and at least one motor winding (A, B), with which the switch or switches (T2, T3) are switched according to one or more of the following conditions:
a) the voltage (U_{EMK}) induced in the winding (A, B) to be connected has the same polarity as the supply voltage (Uᵥ),
b) the voltage (U_{EMK}) induced in the winding (A, B) to be connected, given the same polarity, is smaller than the supply voltage (Uᵥ) with regard to magnitude, and
c) the voltage (U_{EMK}) induced in the winding to be connected, with respect to its zero-crossing, is located in a predefined angular range, assuming the same polarity of the induced voltage and the supply voltage (Uᵥ),
**characterised in that** the predefined angular range is determined by a time measurement in one of the previous half periods of the voltage (U_{EMK}) induced in the winding (A, B) to be connected.

2. A method according to claim 1, with which the switch or the switches (T2, T3) are switched under the condition d), that the zero-crossing of the supply voltage (Uv) lies in front of the expected zero-crossing of the voltage (U_{EMK}) induced in the winding (A, B) to be connected, assuming the same direction,

3. A method according to one of the preceding claims, with which the switch or the switches (T2, T3) are switched under the condition e), that the firing is effected in a manner such that the angle between the voltage (U_{EMK}) induced in the winding (A, B) to be connected and the supply voltage (Uᵥ), assumes a predefined value, preferably the angle is selected separately for each phase in a manner which is dependent on the rotational speed.

4. A method according to one of the preceding claims, with which the switch or the switches (T2, T3) are switched under the condition f), that the firing is effected in a manner such that the angle between the point in time when the current in the winding (A, B) to be connected assumes the value zero, up to the point in time at which the induced voltage (U_{EMK}) in this winding (A, B) assumes the value zero, is dependent on the angle which lies between the previous zero-crossing of the induced voltage and the current point in time of firing.

5. A method according to one of the preceding claims, with which the firing is effected such that the angle between the point in time when the current in the winding (A, B) to be connected assumes the value zero, up to the point in time at which the induced voltage (U_{EMK}) in this winding assumes the value zero, corresponds to the angle which lies between the previous zero-crossing of the induced voltage (U_{EMK}) and the current point in time of firing.

6. A method according to one of the preceding claims, with which the voltage (U_{EMK}) induced in a winding (A, B), in particular its zero-crossings and its polarity, is measured with the supply voltage (Uᵥ) switched off.

7. A method according to one of the preceding claims, with which the voltage (U_{EMK}) induced in the winding (A, B) to be connected, in particular its zero-crossings, is determined by calculation by way of at least one sensor detecting the rotor position.

8. A method according to one of the preceding claims, with which the zero-crossing of the winding (A, B) to be connected, is detected by way of measuring the polarity change of the magnetic field of the respective phase.

9. A method according to one of the preceding claims, with which it is detected, whether the voltage (U_{EMK}) induced in the winding (A, B) to be connected, given the same polarity, is smaller with regard to magnitude than the supply voltage (Uv), by way of measuring the voltage across the switch (T2, T3) of this winding (A, B), and evaluating it depending on the polarity.

10. A method according to one of the preceding claims, with which the zero-crossings of the voltage (Uᵥ) of the mains supply as well as the voltages (U_{EMK}) induced in the windings (A, B) are detected, and evaluated with respect to the point of time in firing, preferably by way of time measurement.

11. A method according to one of the preceding claims, with which the predefined angular range with a four-pole motor is 90 degrees.

12. A method according to one of the preceding claims, with which the predefined angular range is evaluated by a time measurement in the last half-period of the voltage (U_{EMK}) induced in the winding (A, B) to be connected.

13. A synchronous motor which is supplied with alternating current in a single-phase manner, comprising a permanent magnet rotor with at least one winding (A, B) which is arranged in the stator and which may be subjected to the supply voltage (Uv) by way of a locking electronic switch (T2, T3) and with an electronic control circuit (R1) which controls a settable nominal rotational speed (nₛₒₗₗ) while applying the firing rules according to claims 1 to 2, **characterised in that** with regard to the control circuit, the predefined angular range is determined by a time measurement in one of the previous half periods of the voltage (U_{EMK}) induced in the winding (A, B) to be connected.

14. A synchronous motor according to claim 13, with which a further control circuit (R2) is provided for the optimisation of the efficiency, which controls while applying the optimisation rules according to claims 3 and 4.

15. A synchronous motor according to one of the preceding claims, with which a phase-shifting component (C) is connected in series to a winding (A, B).

16. A synchronous motor according to one of the preceding claims, with which at least one further locking electronic switch (T4) is provided, to which the phase-shifting component (C) may be connected.

17. A synchronous motor according to one of the preceding claims, with which the phase-shifting component is a capacitor (C), and the electronic switches (T1-T4) are triacs.

18. A synchronous motor according to one of the preceding claims, with which a winding (A) is divided into two part windings (A1-A2), wherein a locking electronic switch (T1, T2) is allocated to each part winding (A1 and A2).

## Revendications

1. Procédé de contrôle d'un angle d'allumage d'un moteur électrique alimenté en courant alternatif monophasé au moyen d'au moins un commutateur électronique à auto-maintien (T2, T3) entre la tension d'alimentation (Uᵥ) et au moins un enroulement de moteur (A, B), dans lequel le ou les commutateurs (T2, T3) sont mis en circuit selon les conditions suivantes :
a) la tension (U_{EMK}) induite dans l'enroulement (A, B) à connecter a le même signe que la tension d'alimentation (Uᵥ),
b) la tension (U_{EMK}) induite dans l'enroulement (A, B) à connecter est, à signe égal, plus petite en valeur que la tension d'alimentation (Uᵥ) et
c) la tension (U_{EMK}) induite dans l'enroulement (A, B) à connecter, rapportée à son passage par zéro, se trouve dans une plage angulaire prédéterminée, à condition que la tension induite et la tension d'alimentation (Uᵥ) soient de même signe,
**caractérisé en ce que**
la plage angulaire prédéterminée est déterminée par une mesure de temps dans l'une des demi-périodes précédentes de la tension (U_{EMK}) induite dans l'enroulement (A, B) à connecter.

2. Procédé selon la revendication 1, dans lequel le ou les commutateurs (T2, T3) sont mis en circuit sous la condition d. selon laquelle le passage par zéro de la tension d'alimentation (Uᵥ) doit se situer avant le passage par zéro prévisible de la tension (U_{EMK}) induite dans l'enroulement (A, B) à connecter, à condition que le sens soit le même.

3. Procédé selon l'une des revendications précédentes, dans lequel le ou les commutateurs (T2, T3) sont mis en circuit sous la condition e. selon laquelle l'allumage doit s'effectuer de façon telle que l'angle entre la tension (U_{EMK}) induite dans l'enroulement (A, B) à connecter et la tension d'alimentation (Uᵥ) prenne une valeur prédéterminée, de préférence l'angle étant choisi séparément pour chaque phase en fonction de la vitesse.

4. Procédé selon l'une des revendications précédentes, dans lequel le ou les commutateurs (T2, T3) sont mis en circuit sous la condition f. selon laquelle l'allumage s'effectue de façon telle que l'angle compris entre le moment où le courant dans l'enroulement (A, B) à connecter prend la valeur zéro et le moment où la tension induite (U_{EMK}) dans cet enroulement (A, B) prend la valeur zéro, soit fonction de l'angle compris entre le passage par zéro précédent de la tension induite et le moment d'allumage en cours.

5. Procédé selon l'une des revendications précédentes, dans lequel l'allumage s'effectue de façon telle que l'angle compris entre le moment où le courant dans l'enroulement (A, B) à connecter prend la valeur zéro et le moment où la tension induite (U_{EMK}) dans cet enroulement prend la valeur zéro, corresponde à l'angle compris entre le passage par zéro précédent de la tension induite (U_{EMK}) et le moment d'allumage en cours.

6. Procédé selon l'une des revendications précédentes, dans lequel la tension (U_{EMK}) induite dans un enroulement (A, B), en particulier ses passages par zéro et ses signes, est mesurée alors que la tension d'alimentation (Uᵥ) est hors circuit.

7. Procédé selon l'une des revendications précédentes, dans lequel la tension (U_{EMK}) induite dans l'enroulement (A, B) à connecter, en particulier ses passages par zéro, est déterminée par calcul au moyen d'au moins un capteur détectant la position du rotor.

8. Procédé selon l'une des revendications précédentes dans lequel le passage par zéro de l'enroulement (A, B) à connecter s'effectue par mesure du changement de polarité du champ magnétique de la phase concernée.

9. Procédé selon l'une des revendications précédentes dans lequel il est déterminé si la tension (U_{EMK}) induite dans l'enroulement (A, B) à connecter est, à signe égal, plus petite en valeur que la tension d'alimentation (Uᵥ), en mesurant la tension au commutateur (T2, T3) de cet enroulement (A, B) et en l'interprétant en fonction du signe.

10. Procédé selon l'une des revendications précédentes dans lequel les passages par zéro de la tension (Uᵥ) de l'alimentation réseau ainsi que les tensions (U_{EMK}) induites dans les enroulements (A, B) sont détectés, et sont interprétés par rapport au moment d'allumage, de préférence par mesure de temps.

11. Procédé selon l'une des revendications précédentes dans lequel la plage angulaire prédéterminée est de 90° dans le cas d'un moteur quadripolaire.

12. Procédé selon l'une des revendications précédentes dans lequel la plage angulaire prédéterminée est déterminée par une mesure de temps dans la dernière demi-période de la tension (U_{EMK}) induite dans l'enroulement (A, B) à connecter.

13. Moteur synchrone alimenté en courant alternatif monophasé, équipé d'un rotor à aimants permanents, comprenant au moins un enroulement (A, B) disposé dans le stator, qui peut être alimenté en tension d'alimentation (Uᵥ) au moyen d'un commutateur électronique à auto-maintien (T2, T3), et un circuit de régulation électronique (R1) qui commande une vitesse prescrite (nₛₒₗₗ) prédéterminable en appliquant les règles d'allumage selon les revendications 1 à 2,
**caractérisé en ce que,**
au niveau du circuit de régulation, la plage angulaire prédéterminée est déterminée par une mesure de temps dans l'une des demi-périodes précédentes de la tension (U_{EMK}) induite dans l'enroulement (A, B) à connecter.

14. Moteur synchrone selon la revendication 13, dans lequel est prévu un autre circuit de régulation (R2) pour l'optimisation du rendement, qui commande en appliquant les règles d'optimisation selon les revendications 3 et 4.

15. Moteur synchrone selon l'une des revendications précédentes dans lequel un composant déphaseur (C) est monté en amont d'un enroulement (A, B).

16. Moteur synchrone selon l'une des revendications précédentes dans lequel est prévu au moins un autre commutateur électronique à auto-maintien (T4) permettant de déclencher le composant déphaseur (C).

17. Moteur synchrone selon l'une des revendications précédentes dans lequel le composant déphaseur est un condensateur (C) et les commutateurs électroniques (T1 - T4) sont des triacs.

18. Moteur synchrone selon l'une des revendications précédentes dans lequel un enroulement (A) est réparti en deux enroulements partiels (A1 - A2), un commutateur électronique à auto-maintien (T1, T2) étant affecté à chaque enroulement partiel (A1 et A2).
